(19) Europäisches Patentamt
European Patent Office
Office européen des brevets

(11) **EP 2 378 242 B1**

(12) **EUROPÄISCHE PATENTSCHRIFT**

(45) Veröffentlichungstag und Bekanntmachung des Hinweises auf die Patenterteilung:
**08.03.2017   Patentblatt 2017/10**

(51) Int Cl.:
**G01B 7/13** *(2006.01)*          **G01B 13/10** *(2006.01)*

(21) Anmeldenummer: **10016110.8**

(22) Anmeldetag: **27.12.2010**

(54) **Vorrichtung und Verfahren zur Vermessung von Bohrungen**

Device and method for measuring boreholes

Dispositif et procédé de mesure de forages

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2010   DE 102010014817**

(43) Veröffentlichungstag der Anmeldung:
**19.10.2011   Patentblatt 2011/42**

(73) Patentinhaber: **STOTZ FEINMESSTECHNIK GmbH**
**70839 Gerlingen (DE)**

(72) Erfinder: **Stamenkovic, Milan**
**70469 Stuttgart (DE)**

(74) Vertreter: **Manitz, Finsterwald & Partner GbR**
**Postfach 31 02 20**
**80102 München (DE)**

(56) Entgegenhaltungen:
WO-A1-99/15853          DE-A1- 4 004 237
US-A- 4 963 018          US-A- 5 117 081
US-A1- 2002 069 547

EP 2 378 242 B1

## Beschreibung

Die vorliegende Erfindung betrifft eine Vorrichtung zur industriellen Vermessung von Bohrungen in einem Messobjekt, insbesondere Werkstück, mit einer in die Bohrung einführbaren Messsonde, an der wenigstens ein Abstandssensor vorgesehen ist, mit dem der momentane Abstand eines Bezugspunkts der Messsonde von einer Wand der Bohrung bestimmbar ist. Der Begriff "Bohrung" steht hier und im Folgenden auch stellvertretend für andere, in ein Werkstück eingebrachte Ausnehmungen wie Ausfräsungen, Ausschnitte und dergleichen.

In vielen Bereichen der industriellen Messtechnik ist es erforderlich, Bohrungen in Werkstücken hinsichtlich ihrer Formgenauigkeit zu überprüfen. Insbesondere gilt es, Abweichungen von einer vorgegebenen Form, neben Kreisform beispielsweise auch Ellipse, Sternform oder Freiform, festzustellen, um gegebenenfalls das betreffende Werkstück als unbrauchbar zu kennzeichnen. Die Formgenauigkeit von Bohrungen kann prinzipiell mittels Formmessgeräten und/oder 3D-Koordinatenmessmaschinen in einem labor-ähnlichen Messraum ermittelt werden. Derartige Formbestimmungen sind jedoch relativ zeitaufwändig und aufgrund der hohen Anschaffungskosten für die Messgeräte sehr kostspielig. Zudem können die entsprechenden Messungen leicht durch wechselnde Umgebungsbedingungen, wie z.B. Temperatur, Verunreinigungen, Erschütterungen und dergleichen, beeinflusst werden. Aus diesen Gründen ist eine vollständige Kontrolle, bei welcher alle gefertigten Werkstücke überprüft werden, auf die genannte Weise kaum durchführbar.

Sofern bei einer kreisrunden Bohrung die Rundheit überprüft werden soll, wird in der Praxis häufig anstelle der Rundheit die sogenannte "Ovalität" einer Bohrung als Näherungswert für die Rundheitsabweichung ermittelt. Die Ovalität kann über eine Durchmesserbestimmung ermittelt werden. Sofern der Formfehler symmetrisch entlang des Bohrungsumfangs verteilt ist, stimmt die Ovalität im Allgemeinen ausreichend mit der Rundheitsabweichung überein. Wenn jedoch eine unsymmetrische Kreisverformung vorliegt, kommt es zu beträchtlichen Abweichungen zwischen der Ovalität und der Rundheitsabweichung. Dies kann dazu führen, dass bei bestimmten Verhältnissen der Durchmesser- und Rundheitstoleranz die Ovalität kein geeignetes Prüfkriterium für die Einteilung der Werkstücke in die Kategorien "brauchbar" und "nicht brauchbar" ist und die Qualitätskontrolle gegebenenfalls durch unterstützende, im Messraum durchgeführte Rundheitsmessungen zu ergänzen ist, was wiederum mit einem hohen Zeitaufwand und unerwünschten Kosten verbunden ist. Da in vielen praktischen Fällen die über die Ovalität ermittelte Rundheit geringer ist als die direkt ermittelte Rundheit, besteht insbesondere das Problem, dass Werkstücke, die aufgrund von unzulässig großen Formfehlern unbrauchbar sind, als brauchbar eingestuft werden, was im Allgemeinen unbedingt zu vermeiden ist.

In der US 2002/0069547 A1_ist eine Vorrichtung zum Vermessen von Bohrungen in Werkstücken offenbart, welche mit einer pneumatischen Messsonde arbeitet. Die Messsonde ist an einem Halter fixierbar, welcher seinerseits anstelle eines Werkzeugs mit der Spindel einer Werkzeugmaschine koppelbar ist.

Die DE 40 04 237 A1 offenbart ebenfalls eine Vermessungsvorrichtung, welche einen pneumatischen Messkopf umfasst.

Die US 4,963,018_offenbart eine Vermessungsvorrichtung mit optischer Messsonde. Die Messsonde ragt aus einem Gehäuse hervor, das auf das zu vermessende Werkstück aufgesetzt wird. Mittels eines ersten Motors kann die Messsonde axial bewegt werden. Ein zweiter Motor dient dazu, die Messsonde um ihre Längsachse zu drehen.

In der WO 99/15853 ist eine Vorrichtung zum Vermessen großer Zylindereinsätze offenbart. Die Vorrichtung umfasst einen am Messobjekt fixierbaren Halter sowie eine Messeinheit, welche mittels Gurtbändern an dem Halter aufgehängt ist. Zur axialen Bewegung der Messeinheit innerhalb der Bohrung werden die Gurtbänder mittels gesteuerter Motoreinheiten auf- bzw. abgewickelt.

Es ist eine Aufgabe der Erfindung, eine Möglichkeit anzugeben, um schnell und zuverlässig Bohrungen zu vermessen und insbesondere in einem industriellen Umfeld die Form und die Toleranz von Bohrungen zu prüfen.

Die Lösung der Aufgabe erfolgt durch eine Vorrichtung mit den Merkmalen des Anspruchs 1.

Bei einer erfindungsgemäßen Vorrichtung ist die Messsonde drehbar an einem Halter, der gegenüber dem Messobjekt fixiert ist und/oder dessen Position relativ zu dem Messobjekt bekannt ist, gelagert, wobei eine Auswerteeinrichtung der Vorrichtung dazu ausgebildet ist, im Verlauf einer Drehung der Messsonde eine Anzahl an aufeinanderfolgend bestimmten Abständen zu empfangen.

Die erfindungsgemäße Vorrichtung weist Mittel zum Bestimmen der Neigung der Messsonde relativ zu dem Halter sowie Korrekturmittel zum Kompensieren von Eigenbewegungen und Fehlstellungen der Messsonde anhand der Neigung auf. Hierdurch können Messfehler kompensiert werden, welche sich bei einer unterschiedlichen Anordnung der Längsmittelachse der Messsonde und der Rotationsachse ergeben können. Insbesondere kann eine etwaige Taumelbewegung der Messsonde während des Drehens oder eine Verkippung des Halters erfasst und bei der Auswertung der Messdaten berücksichtigt werden.

Ein Vorteil der Erfindung besteht darin, dass im Gegensatz zu bekannten Systemen nicht der Durchmesser der zu vermessenden Bohrung, sondern der Abstand zwischen der Messsonde und der Wand der Bohrung bestimmt wird, wodurch eine besonders exakte Messung möglich ist. Durch eine Zuordnung zwischen der momentanen Lage und Drehstellung der Messsonde relativ zum Messobjekt und dem durch den Abstandssensor gemessenen jeweiligen Abstand kann nicht nur ein einzelner Parameter, sondern die genaue Form der Bohrung ermittelt werden. Um exakte Messwerte zu erhalten, wird der Halter bevorzugt gegenüber dem Messobjekt fixiert. Zudem oder alternativ kann die Relativposition des Halters gegenüber dem Messobjekt ermittelt und bei der Auswertung berücksichtigt werden.

Weiterbildungen der Erfindung sind in den abhängigen Ansprüchen, der Beschreibung sowie den beigefügten Zeichnungen angegeben.

Gemäß einer Ausführungsform kann die Auswerteeinrichtung dazu ausgebildet sein, aus den aufeinanderfolgend bestimmten Abständen einen Pferchkreis und einen Hüllkreis der vermessenen Bohrung zu bestimmen.

Durch den Größenunterschied zwischen dem Pferchkreis und dem Hüllkreis ist die Rundheit der Bohrung gegeben. Als Pferchkreis und Hüllkreis werden diejenigen konzentrischen Kreise bezeichnet, zwischen welchen alle als Radius bezüglich eines gemeinsamen Zentrums ermittelten Wandkoordinaten der Bohrung liegen, wobei der kleinere Kreis der Pferchkreis und der größere Kreis der Hüllkreis ist. Zur Berechnung der Kreise anhand von ermittelten Abstandswerten zwischen einem Bezugpunkt der Messsonde und der Wand der Bohrung können auf dem Fachgebiet bekannte Algorithmen, wie z.B. LSC (least squares circle), MCC (minimum circumscribed circle), MIC (maximum inscribed circle), und MZC (minimum zone circle), verwendet werden.

Durch die Bestimmung des Pferchkreises und des Hüllkreises wird eine Vermessung von Bohrungen mit hoher Genauigkeit ermöglicht, denn während der Unterschied zwischen dem minimalen Durchmesser und dem maximalen Durchmesser auch bei ausgeprägt unrunden Bohrungen relativ gering sein kann, korreliert der Unterschied zwischen dem Pferchkreis und dem Hüllkreis wesentlich besser mit der realen Rundheitsabweichung der Bohrung. Durch die Bestimmung des Pferchkreises und des Hüllkreises aus den gemessenen Abständen zwischen der Messsonde und der Wand der Bohrung ergibt sich somit im Vergleich zu herkömmlichen Systemen eine bessere Beurteilung der tatsächlichen Rundheit einer Bohrung. Darüber hinaus kann auch der Durchmesser der Bohrung auf die beschriebene Weise zuverlässig ermittelt werden.

Gemäß einer weiteren Ausführungsform ist die Auswerteeinrichtung dazu ausgebildet, aus den aufeinanderfolgend bestimmten Abständen zumindest abschnittsweise den Formverlauf der Bohrung zu ermitteln. Durch die Ermittlung des Formverlaufs - also des räumlichen Verlaufs der Wand der Bohrung - können insbesondere auch Bohrungen, die eine vorgegebene Soll-Rundheitsabweichung aufweisen, überprüft werden. Beim Einpressen eines Werkstücks in eine Bohrung kann es nämlich zu einer Verformung kommen, welche im Falle von exakt zylindrisch gefertigten Bohrungen zu einer Rundheitsabweichung nach der Montage führt. Dieses Problem kann dadurch behoben werden, dass der Bohrung gezielt eine von der exakten Rundheit abweichende Form verliehen wird, welche der erwarteten Verformung gerade entgegengerichtet ist. Beispielsweise kommen hier leicht ovale oder sternförmige Bohrungen in Betracht. Durch eine Ermittlung des vollständigen Formverlaufs können auch solche Bohrungen zuverlässig vermessen werden. Ein vorgegebener Formverlauf kann durch eine stetige Funktion mit einer oberen und einer unteren Toleranzgrenze definiert sein. Der ermittelte tatsächliche Formverlauf kann insbesondere daraufhin überprüft werden, ob er innerhalb der Toleranzgrenzen liegt. Bei der Ermittlung des Formverlaufs ist vorzugsweise die Abtastrate, also die Anzahl der pro Drehwinkeleinheit bestimmten Abstände, an den vorgegebenen Formverlauf angepasst. Komplexe Formen erfordern im Allgemeinen eine höhere Abtastrate.

Bevorzugt ist ein Antrieb zum Drehen der Messsonde gegenüber dem Halter vorgesehen, um einen weitgehend automatisierten Messvorgang zu ermöglichen.

Gemäß einer Ausführungsform der Erfindung ist ein Drehstellungssensor zur Bestimmung der momentanen Drehstellung der Messsonde relativ zu dem Halter vorgesehen, wobei die Auswerteeinrichtung dazu ausgebildet ist, im Verlauf einer Drehung der Messsonde jeweilige durch den Abstandssensor bestimmte Abstände mit den zugehörigen durch den Drehstellungssensor bestimmten Drehstellungen in Beziehung zu setzen. Auf diese Weise kann nicht nur ein minimaler Abstand und ein maximaler Abstand aus allen gemessenen Abständen ermittelt werden, sondern es kann auch der Wandverlauf oder Formverlauf der Bohrung, also z.B. deren Querschnittsform in einer bestimmten Ebene, bestimmt werden. Insbesondere kann auch jeder einzelne Abstand daraufhin überprüft werden, ob er zwischen einem vorgegebenem Minimalwert und einem Maximalwert liegt.

Bevorzugt sind Mittel zum Bestimmen der Position der Messsonde relativ zu dem Halter und/oder zum Messobjekt vorgesehen. Hierdurch können weitere Messfehler kompensiert werden. Insbesondere kann eine etwaige Seitenverschiebung des Halters erfasst und bei der Auswertung der Messdaten berücksichtigt werden.

Als Mittel zum Bestimmen der Neigung der Messsonde kann wenigstens ein Abstandssensor an dem Halter vorgesehen sein, mit welchem der momentane Abstand eines Bezugspunkts des Halters von der Messsonde bestimmbar ist. Eine Neigungsänderung der Messsonde relativ zu dem Halter und somit - bei fixierter oder zumindest bekannter Position des Halters gegenüber dem Werkstück - zu dem Werkstück ist durch einen derartigen Abstandssensor leicht bestimmbar.

Gemäß einer Ausgestaltung ist an dem Halter wenigstens ein Paar aus zwei in einer gemeinsamen Ebene angeordneten und um einen Drehwinkel, vorzugsweise um 90°, bezüglich einer Rotationsachse der Messsonde zueinander versetzten Abstandssensoren zur Bestimmung des momentanen Abstands eines Bezugspunkts des Halters von der Messsonde vorgesehen. Durch ein Paar von drehversetzten Abstandssensoren kann die zweidimensionale Position der Messsonde in der betreffenden Ebene ermittelt werden.

Gemäß einer weiteren Ausführungsform sind wenigstens zwei in Richtung der Rotationsachse voneinander beabstandete Paare von Abstandssensoren zur Bestimmung des momentanen Abstands eines Bezugspunkts des Halters von der Messsonde vorgesehen. Auf diese Weise kann die zweidimensionale Position der Messsonde in mehreren Ebenen entlang der Rotationsachse gemessen werden. Durch eine Messung in zwei parallelen Ebenen kann z. B. die räumliche Neigung der Messsonde relativ zu dem Halter ermittelt werden. Um die Genauigkeit und Zuverlässigkeit der Messung weiter zu erhöhen, können auch jeweils mehrere Paare von Abstandssensoren in einer gemeinsamen Ebene angeordnet sein.

Es können auch ein oder mehrere Sensoren, insbesondere Abstandssensoren, vorgesehen sein, um die momentane Position des Halters relativ zum Werkstück zu erfassen. Beispielsweise können an einer dem Werkstück zugewandten Seite des Halters pneumatische Messdüsen vorgesehen sein. Auf diese Weise kann z.B. eine geneigte Werkstückoberfläche und damit eine gegenüber einer Flächennormale verkippte Messsonde rechnerisch kompensiert werden.

Die Messsonde kann dornartig und insbesondere abschnittsweise zylindrisch ausgebildet sein, wobei eine Längsmittelachse der Messsonde mit einer Rotationsachse zusammenfällt. Der Halter wird dann bevorzugt derart am Werkstück fixiert, dass die Längsmittelachse der Messsonde möglichst exakt mit der Längsmittelachse der Bohrung zusammenfällt. Die dornartige Messsonde kann entlang der Rotationsachse in der Bohrung verschoben werden, um so die Form der Bohrung in unterschiedlichen Eindringtiefen zu vermessen.

Gemäß einer weiteren Ausführungsform sind mehrere Abstandssensoren zur Bestimmung des momentanen Abstands eines Bezugspunkts des Halters von der Messsonde an der Messsonde vorgesehen, welche in Richtung einer Rotationsachse der Messsonde zueinander beabstandet sind und bevorzugt in Bezug auf die Rotationsachse zueinander drehversetzt sind. Die Bohrung kann somit in mehreren Ebenen gleichzeitig vermessen werden. Die Abstandssensoren können dabei relativ zueinander um einen Drehwinkel versetzt an der Messsonde angeordnet sein. Ein derartiger Versatz ist bei der Auswertung der Messdaten zu berücksichtigen.

Wenigstens einer der Abstandssensoren kann auf einem induktiven oder kapazitiven Messprinzip beruhen. Beispielsweise können Induktivtaster in Form von linear variablen Differential-Transformatoren (LVDT) mit oder ohne pneumatische Abhebung verwendet werden.

Weiterhin kann wenigstens einer der Abstandssensoren als pneumatische Messdüse ausgebildet sein. Gemäß einer Ausgestaltung der Erfindung sind alle vorgesehenen Abstandssensoren als pneumatische Messdüsen ausgebildet.

Bevorzugt ist an dem Halter eine Anlagefläche zum Andrücken der Vorrichtung an eine Oberfläche des Messobjekts vorgesehen. Insbesondere kann eine ebene Stirnseite eines ringförmigen Halters als Anlagefläche dienen. Durch eine flächige Fixierung des Halters am Werkstück können Relativbewegungen zwischen dem Halter und dem Werkstück zuverlässig vermieden werden.

An dem Halter kann wenigstens eine Aufnahme für einen Eingriff mit einem Wandabschnitt des Messobjekts vorgesehen sein, wobei in der Aufnahme insbesondere elastische Elemente zum Fixieren des Wandabschnitts in der Aufnahme vorgesehen sind. Durch eine derartige Aufnahme kann die Fixierung des Halters, insbesondere bei Werkstücken mit unzureichenden Anlageflächen, verbessert werden.

Gemäß einer weiteren Ausführungsform ist die Messsonde in Richtung der Rotationsachse relativ zum Halter verstellbar, insbesondere mittels eines angetriebenen Linearschlittens. Somit kann eine Vermessung der Bohrung in unterschiedlichen Tiefen besonders schnell und zuverlässig erfolgen. Die Erfindung betrifft auch ein Verfahren zur Vermessung von Bohrungen in einem Messobjekt, insbesondere Werkstück, mittels einer in die Bohrung einführbaren Messsonde, an der wenigstens ein Abstandssensor vorgesehen ist, mit dem der momentane Abstand eines Bezugspunkts der Messsonde von einer Wand der Bohrung bestimmbar ist.

Bei dem erfindungsgemäßen Verfahren wird die Messsonde in die Bohrung eingeführt und in der Bohrung um eine Rotationsachse gedreht, wobei während des Drehens wiederholt oder kontinuierlich die momentanen Abstände bestimmt werden.

Weiterhin wird bei dem erfindungsgemäßen Verfahren die Neigung der Messsonde relativ zu dem Halter bestimmt und Eigenbewegungen sowie Fehlstellungen der Messsonde werden anhand der Neigung kompensiert.

Gemäß einer Ausführungsform werden der Pferchkreis der Bohrung und der Hüllkreis der Bohrung ermittelt. Dies kann anhand eines auf dem Fachgebiet bekannten Algorithmus erfolgen. Die Differenz der Radiuswerte für den Pferchkreis und den Hüllkreis kann als wichtiger Qualitätsparameter der Bohrung herangezogen werden. Durch eine derartige radiusbezogene Vermessung der Bohrung können Rundheitsabweichungen wesentlich exakter und zuverlässiger ermittelt werden als durch eine übliche durchmesserbezogene Vermessung.

Die Messsonde wird vorzugsweise während eines Messvorgangs um wenigstens eine volle Umdrehung gedreht. Dadurch ist ausgeschlossen, dass begrenzte lokale Formabweichungen bei der Messung unberücksichtigt bleiben.

Aus der Abweichung zwischen dem Pferchkreis und dem Hüllkreis kann insbesondere die Rundheit der Bohrung bestimmt werden. Die Rundheit ist ein wichtiges Maß für die Fertigungsqualität von Bohrungen.

Gemäß einer weiteren Ausführungsform wird aus den während des Drehens bestimmten Abständen zumindest abschnittsweise der Formverlauf der Bohrung ermittelt. Auf diese Weise können insbesondere auch Werkstücke, die eine Bohrung mit vorgegebenem Formverlauf, z.B. einem elliptischen, sternförmigen oder einer Freiform entsprechenden Formverlauf, aufweisen, überprüft werden.

Vorzugsweise wird eine während des Drehens auftretende Positionsänderung und/oder Neigungsänderung der Messsonde relativ zum Messobjekt erfasst und bei der weiteren Auswertung berücksichtigt. Taumelbewegungen der Messsonde oder eine Fehlstellung der Messsonde - z.B. eine Verkippung der Messsonde aufgrund einer geneigten Oberfläche des Messobjekts - können so berücksichtigt und deren Einfluss auf das Messergebnis kompensiert werden.

Die Erfindung wird im Folgenden beispielhaft unter Bezugnahme auf die Zeichnungen beschrieben.

Fig. 1    veranschaulicht die Rundheitsbestimmung einer Bohrung mittels eines Pferchkreises und eines Hüllkreises.

Fig. 2    veranschaulicht die Bestimmung der Ovalität einer Bohrung mittels eines minimalen Durchmessers und eines maximalen Durchmessers.

Fig. 3    veranschaulicht das Grundprinzip eines Vermessungsverfahrens gemäß einer ersten Ausführungsform der Erfindung.

Fig. 4    veranschaulicht das Grundprinzip eines Vermessungsverfahrens gemäß einer zweiten Ausführungsform der Erfindung.

Fig. 5    zeigt eine Messsonde einer erfindungsgemäßen Vermessungsvorrichtung.

Fig. 6    zeigt die Messsonde gemäß Fig. 5 in einem zugehörigen Halter.

Fig. 7    zeigt die Messsonde gemäß Fig. 5 in einem alternativ gestalteten Halter, an welchem eine Aufnahme für einen Eingriff mit einem Wandabschnitt eines Messobjekts vorgesehen ist.

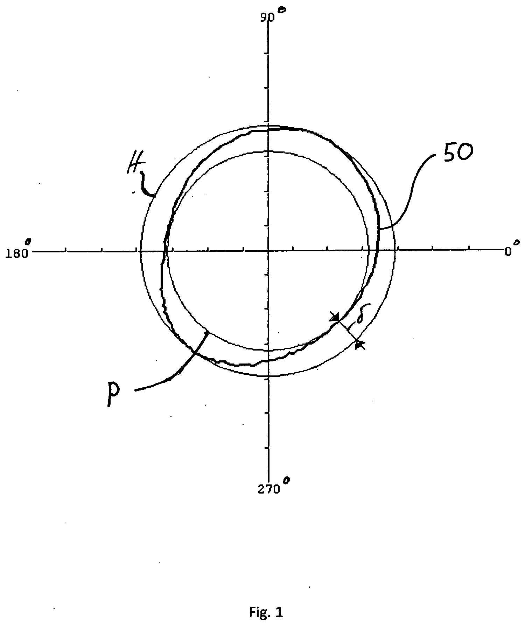

Die Rundheitsbestimmung mittels eines Hüllkreises H und eines hierzu konzentrischen Pferchkreises P ist in Fig. 1 anhand einer Draufsicht auf eine Bohrung 50 in einem zweidimensionalen Koordinatensystem dargestellt. Der Radius der zur Verdeutlichung ausgeprägt oval dargestellten Bohrung 50 in Bezug auf das Zentrum des Koordinatensystems variiert entlang des Wandverlaufs der Bohrung 50 zwischen dem Radius des Pferchkreises P und dem Radius des Hüllkreises H. Je schlechter die Rundheit der Bohrung 50 ist, desto stärker weichen die Radien des Hüllkreises H und des Pferchkreises P voneinander ab. Die Differenz $\delta$ zwischen dem Radius des Hüllkreises H und dem Radius des Pferchkreises P ist somit ein Maß für die Abweichung der Form der Bohrung 50 von der exakten Rundheit. Um den Hüllkreis H und den Pferchkreis P zu ermitteln, müssen die Radiuswerte der Bohrung 50 in Bezug auf ein gemeinsames Zentrum entlang des gesamten Wandverlaufs der Bohrung 50 ermittelt werden, was mit einem hohen Aufwand verbunden ist.

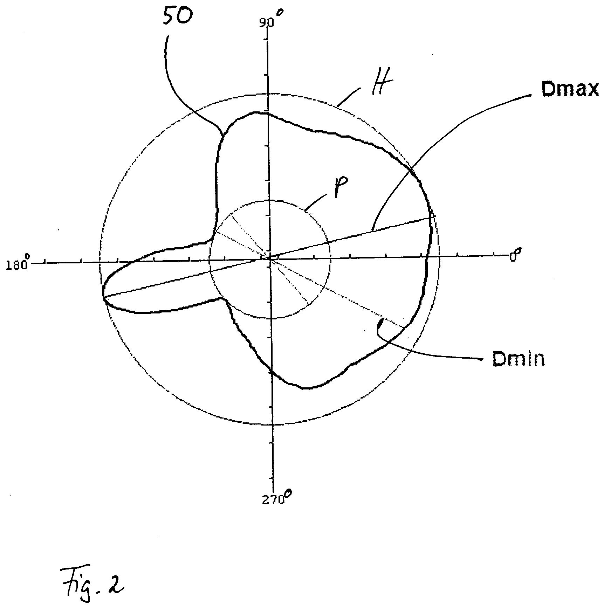

In der Praxis wird daher häufig gemäß Fig. 2 vorgegangen, d.h. die Güte der Rundheit der Bohrung 50 wird anhand ihres minimalen Durchmessers Dmin sowie ihres maximalen Durchmessers Dmax bestimmt. Speziell kann der größte Durchmesser Dmax und der kleinste Durchmesser Dmin der Bohrung ermittelt und die Ovalität anhand folgender Faustformel bestimmt werden:

$$\text{Ovalität} = (\text{Dmax} - \text{Dmin}) / 2.$$

Je nach der Art der Rundheitsabweichung kann dieses Verfahren jedoch unerwünschte Ergebnisse liefern. Speziell kann es vorkommen, dass eine Bohrung 50 mit unsymmetrischem Wandverlauf einen relativ geringen Unterschied zwischen dem minimalen Durchmesser Dmin und dem maximalen Durchmesser Dmax aufweist, obwohl sie relativ stark unrund ist. Dies kann bei einer im Rahmen einer Qualitätskontrolle vorzunehmenden Vermessung dazu führen, dass Werkstücke mit nicht ausreichend runden Bohrungen die Kontrolle bestehen und ausgeliefert werden, was im Allgemeinen unbedingt zu vermeiden ist.

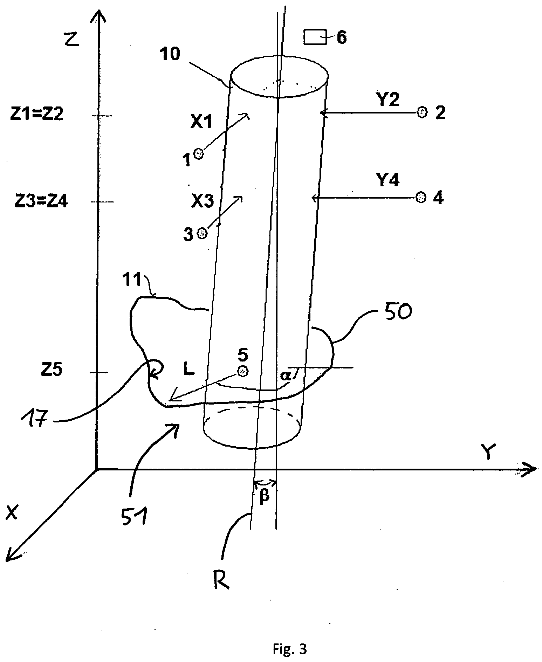

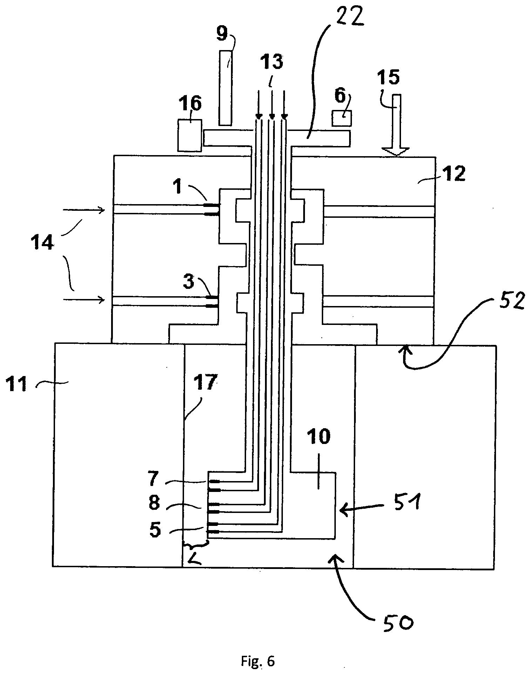

Erfindungsgemäß wird daher nach dem in Fig. 3 gezeigten Prinzip vorgegangen. An einer stabförmigen zylindrischen Messsonde 10, welche an einem nachstehend noch näher zu beschreibenden Halter 12 (Fig. 6) gelagert ist, ist ein messsondenseitiger Abstandssensor 5 angebracht. Die Messsonde 10 ist um eine hier vertikale Rotationsachse R drehbar, welche mit der Längsmittelachse der zylindrischen Messsonde 10 zusammenfällt. Im dreidimensionalen Koordinatensystem XYZ gemäß Fig. 3-5 ist die Rotationsachse R im Wesentlichen in Z-Richtung ausgerichtet. Der messsondenseitige Abstandssensor 5 ist dazu ausgebildet, die momentane Entfernung zwischen der Messsonde 10 und einer Wand 17 des zu vermessenden Werkstücks 11 in bezüglich der Rotationsachse R radialer Richtung zu erfassen. Der Abstandssensor 5 ist fest mit der Messsonde 10 verbunden. Der momentane Drehwinkel $\alpha$ der Messsonde 10 bezüglich der Rotationsachse R ist daher durch die Position des Abstandssensors 5 bestimmt. Mittels eines Drehwinkelsensors 6 kann der momentane Drehwinkel $\alpha$ bestimmt werden.

Weiterhin sind vier halterseitige Abstandssensoren 1, 2, 3, 4 vorgesehen, mittels welcher die aktuelle Position und/oder die aktuelle Neigung der Messsonde 10 relativ zu dem Werkstück 11 bestimmbar ist. Zu diesem Zweck sind die Abstandsensoren 1, 2, 3, 4 fest mit dem Halter 12 verbunden, welcher relativ zu dem Werkstück 11 fixierbar ist. Bei fixiertem Halter 12 sind also die Abstandssensoren 1, 2, 3, 4 in Bezug auf das Werkstück 11 und das Koordinatensystem XYZ unbeweglich, während die Messsonde 10 relativ zu dem Halter 12 beweglich ist.

Jeweils zwei der halterseitigen Abstandssensoren 1, 2, 3, 4 sind in einer gemeinsamen Ebene angeordnet und um einen Drehwinkel von 90° zueinander versetzt. Die Höhe Z1 des ersten halterseitigen Abstandssensors 1 ist also gleich der Höhe Z2 des zweiten halterseitigen Abstandssensors 2 (Z1=Z2) und die Höhe Z3 des dritten halterseitigen Abstandssensors 3 ist gleich der Höhe Z4 des vierten halterseitigen Abstandssensors 4 (Z3=Z4). Der messsondenseitige Abstandssensor 5 ist auf einer von Z1 und Z2 verschiedenen Höhe Z5 nahe dem vorderen Ende 51 der Messsonde 50 angeordnet.

Wie aus Fig. 3 hervorgeht, erfassen der erste und der dritte halterseitige Abstandssensor 1, 3 den Abstand zu der Messsonde 10 in X-Richtung, während der zweite und der vierte halterseitige Abstandssensor 2, 4 den Abstand zu der Messsonde 10 in Y-Richtung erfassen. Auf diese Weise kann die Position und die Neigung der Messsonde 10 in dem Koordinatensystem XYZ bestimmt werden. Die Neigung der Messsonde 10 kann z.B. durch die Winkelabweichung $\beta$ zwischen der Rotationsachse R der Messsonde 10 und der Z-Achse des Koordinatensystems XYZ angegeben werden.

Zum Durchführen einer Vermessung wird die Messsonde 10 einmal vollständig, d.h. um 360°, um die Rotationsachse R gedreht, wobei der messsondenseitige Abstandssensor 5 während des Drehens kontinuierlich oder in wiederholten Einzelschritten die Abstände L zwischen der Messsonde 10 und der Innenwand 17 der Bohrung 50 erfasst und der Drehwinkelsensor 6 die jeweils zugehörigen Drehstellungen $\alpha$ der Messsonde 10 erfasst. Der messsondenseitige Bezugspunkt für den Abstand L kann dabei auf der Oberfläche der Messsonde 10, auf einer vorderen oder inneren Messfläche des messsondenseitigen Abstandssensors 5 oder an einer beliebigen anderen, relativ zu der Messsonde 10 raumfesten Stelle liegen.

Sofern sich die Position und die Neigung der Messsonde 10 in dem Koordinatensystem XYZ während des Drehens nicht ändert, kann auf Grund der durch den Abstandssensor 5 ermittelten Abstandswerte L und der diesen zugeordneten, durch den Drehwinkelsensor 6 ermittelten Drehwinkelwerte $\alpha$ unmittelbar der Hüllkreis H sowie der Pferchkreis P und somit die Rundheit der Bohrung 50 bestimmt werden.

Wenn sich jedoch die Position und/oder die Neigung der Messsonde 10 relativ zu dem Halter 12 in dem Koordinatensystem XYZ während des Drehens ändert, kommt es zu einer Verfälschung der ermittelten Abstandswerte L und folglich zu einem verfälschten Wert für die Rundheit der Bohrung 50.

Aus diesem Grund ist eine in den Figuren nicht dargestellte Auswerteeinrichtung vorgesehen, um die durch den Abstandssensor 5 ermittelten Abstandswerte L zu korrigieren und somit die Genauigkeit und Zuverlässigkeit der Rundheitsbestimmung zu erhöhen. Speziell wird der aktuell ermittelte Abstandswert L($\alpha$) durch L'($\alpha$) ersetzt:

$$L'(\alpha) = L(\alpha) + Korrektur(\alpha, S1, S2, S3, S4, Z1, Z3, Z5)$$

wobei S1, S2, S3 und S4 die von den Abstandssensoren 1, 2, 3 und 4 ermittelten Abstandswerte sind. Die korrigierten Werte L'($\alpha$) werden für den Winkelbereich von $\alpha$=0° bis $\alpha$=360° ermittelt und unter Verwendung eines auf dem Fachgebiet bekannten Algorithmus zur Rundheitsberechnung herangezogen.

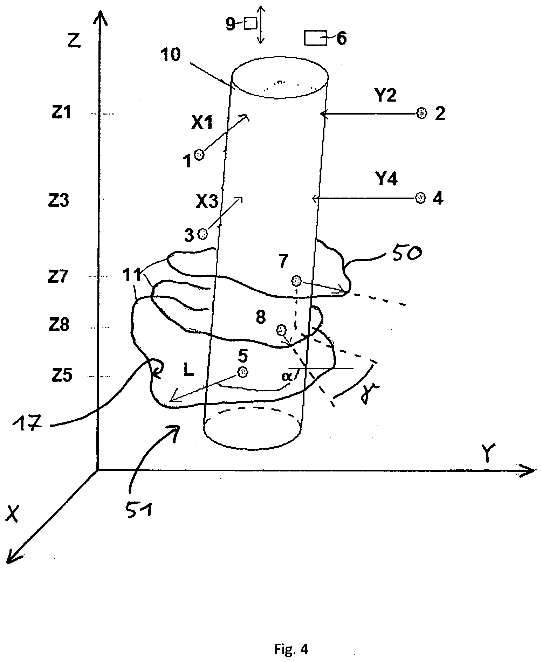

In Fig. 4 ist eine Variante der Erfindung dargestellt, bei welcher die Messsonde 10 mittels eines motorisierten Linearschlittens 9 relativ zu dem Halter 12 in Z-Richtung verstellbar ist. Mittels des Linearschlittens 9 kann die Messsonde 10 in einer beliebigen Höhe Z relativ zu dem Werkstück 11, d.h. in einer beliebigen Tiefe der Bohrung 50, positioniert werden, um so die Bohrung 50 dreidimensional zu vermessen.

Weiterhin sind bei der Variante gemäß Fig. 4 zusätzlich zu dem messsondenseitigen Abstandssensor 5 zwei weitere messsondenseitige Abstandssensoren 7, 8 an der Messsonde 10 angebracht. Die Anordnung aus drei in unterschiedlichen Höhen angebrachten Abstandssensoren 5, 7, 8 ermöglicht eine gleichzeitige Vermessung der Bohrung 50 in drei verschiedenen Höhen Z5, Z7, Z8. Je nach Anwendung können noch mehr Abstandssensoren an der Messsonde 10 vorgesehen sein.

Die Abstandssensoren 5, 7, 8 sind jeweils um einem Drehwinkel $\gamma$ zueinander drehversetzt an der Messsonde 10 angeordnet. Der betreffende Winkelversatz $\gamma$ ist bei der Auswertung zu berücksichtigen:

$$L'_i(\alpha) = L_i(\alpha) + \text{Korrektur}(\alpha, S1, S2, S3, S4, Z1, Z3, Z_i, \gamma_i)$$

wobei i für den Index des jeweiligen Abstandsensors 5, 7, 8 steht.

Durch eine Überlagerung mehrerer Rundheitsformen sowie eine Auswertung von Mantellinien kann abgesehen von der Rundheit auch die Zylinderform und die Geradheit der Bohrung 50 ermittelt werden. Weiterhin kann - gegebenenfalls nach einer Kalibrierung mit passenden Einstellnormalen - eine Durchmesser-Bestimmung erfolgen.

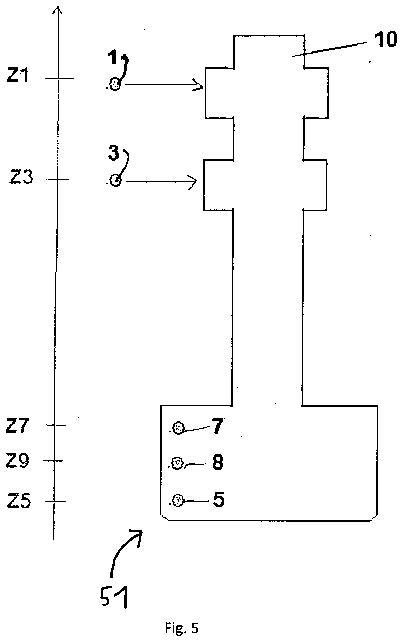

Die konkrete Ausgestaltung der Messsonde 10 kann dem Werkstück 11 und den jeweiligen Abstands- und Drehwinkelsensoren 1-8 angepasst werden. Aus praktischen Gründen kann die Messsonde 10 aus zylindrischen Abschnitten von unterschiedlichem Durchmesser aufgebaut sein, wie das in Fig. 5 in einer Seitenansicht dargestellte Ausführungsbeispiel zeigt.

In Fig. 6 ist ein typischer Aufbau einer erfindungsgemäßen Vermessungsvorrichtung in einer Schnittansicht dargestellt. Die Vorrichtung umfasst einen ringförmigen Halter 12 sowie eine in dem Halter 12 drehbar gelagerte Messsonde 10. Mittels eines Antriebs kann die Messsonde 10 relativ zu dem Halter 12 gedreht werden. Als Antrieb kann ein Zahnriemenantrieb mit einem Motor 16 und einem angetriebenen Teller 22 verwendet werden, der mit der Messsonde 10 verbunden und insbesondere einstückig mit dieser ausgebildet ist. Der Drehwinkelsensor 6 ist dem Teller 22 gegenüberliegend angeordnet.

Die Messsonde 10 ist als pneumatischer Messdorn ausgebildet, wobei sowohl die messsondenseitigen Abstandssensoren 5, 7, 8 als auch die halterseitigen Abstandssensoren 1, 2, 3, 4 pneumatische Messdüsen sind. Der in Fig. 6 gezeigte pneumatische Messdorn ist in der Lage, die Rundheit der Bohrung 50 gleichzeitig in 3 unterschiedlichen Messebenen zu ermitteln. Grundsätzlich ist die Anzahl der Messebenen lediglich durch die Geometrie der Messsonde 10 und des Werkstücks 11 begrenzt. Die pneumatischen Messdüsen 1, 2, 3, 4, 5, 7, 8 werden durch Kanäle 13, 14 einzeln mit unter Druck gesetzter Luft versorgt. Jede Messdüse 1, 2, 3, 4, 5, 7, 8 ist an einen nicht dargestellten pneumatisch-elektrischen Wandler angeschlossen, der in Abhängigkeit von dem Luftdruck der jeweiligen Messdüse ein Signal ausgibt, welches den Abstand der Messdüse von einer gegenüberliegenden Wand angibt.

Der Halter 12 weist eine ebene stirnseitige Anlagefläche 52 auf und wird mit einer Kraft 15 derart gegen die Oberfläche des Werkstücks 11 gepresst, dass die Messsonde 10 in die Bohrung 50 hineinragt. Durch das Anpressen ist der Halter 12 unbeweglich am Werkstück 11 fixiert.

Zum Durchführen einer Messung wird die Messsonde 10 mittels des Motors 16 um wenigstens eine volle Umdrehung gedreht und der Abstand L zwischen der Innenwand 17 des Werkstücks 11 und der Messsonde 10 wird mittels der messsondenseitigen Messdüsen 5, 7, 8 gemessen. Beispielsweise können während einer vollen Umdrehung etwa 100 Abstände L gemessen werden. Die gemessenen Abstände L werden wie vorstehend beschrieben anhand der durch die halterseitigen Messdüsen 1,2,3,4 und den Drehwinkelsensor 6 ermittelten Positions- und/oder Neigungswerte korrigiert und als L' für eine Rundheits-, Durchmesser-, Formverlaufs-, Geradheits- und Zylinderformberechnung herangezogen. Zum Ermitteln der Zylinderform und der Geradheit der Bohrung 50 werden mindestens 3 Messebenen benutzt. Zur Rundheitsbestimmung werden aus den korrigierten Abständen L' mittels bekannter Algorithmen wie LSC, MCC, MIC und MZC der Pferchkreis P und der Hüllkreis H der Bohrung 50 bestimmt.

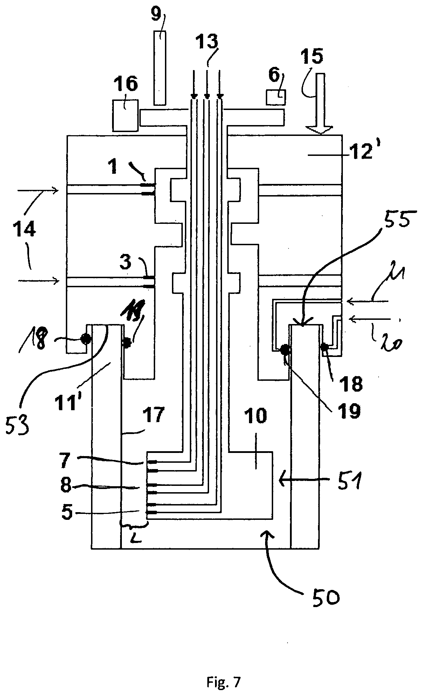

In Fig. 7 ist eine Ausführungsform der erfindungsgemäßen Vermessungsvorrichtung dargestellt, die insbesondere für Anwendungen mit begrenztem Bauraum oder für dünnwandige Werkstücke 11' geeignet ist. Der Halter 12' weist eine stirnseitige Ausnehmung 53 auf, welche als Aufnahme für einen Eingriff mit dem oberen Rand 55 des Werkstücks 11' ausgebildet ist. Es liegt also eine mechanische Führung zwischen dem Halter 12' und dem Werkstück 11' vor. An der Innenwand der Ausnehmung 53 sind O-Ringe 18, 19 vorgesehen, welche die mechanische Fixierung des Halters 12' an dem Werkstück 11' weiter verbessern. Dies kann insbesondere bei solchen Anwendungen nützlich sein, bei welchen die Vermessungsvorrichtung in eine Maschine eingebaut ist, welche starke Erschütterungen erzeugt. Weiterhin sind Kanäle 20, 21 vorgesehen, um die O-Ringe 18, 19 mit Druckluft zu beaufschlagen. Dadurch kann der Halter 12' gegenüber dem Werkstück 11' verspannt werden. Radiale Vibrationen des Werkstückes 11' können dadurch besonders gut ausgeglichen werden. Wie aus den Fig. 5-7 hervorgeht, kann die Messsonde 10 Abschnitte mit unterschiedlichem Durchmesser aufweisen. Im Bereich der auszumessenden Bohrung 50 ist der Durchmesser der Messsonde 10 verhältnismäßig groß und bevorzugt annähernd so groß wie der Durchmesser der Bohrung 50, um eine hohe Messgenauigkeit zu erzielen. In den übrigen Bereichen ist der Durchmesser der Messsonde 10 bevorzugt kleiner, um das Gewicht gering zu halten. Im Bereich der halterseitigen Abstandssensoren 1, 2, 3, 4 kann der Durchmesser wieder etwas vergrößert sein. Die Außenflächen der Messsonde 10 sind in diesem Bereich bevorzugt besonders genau hergestellt, um die Taumelbewegung möglichst genau ausmessen zu können. Bei sehr kleinen auszumessenden Bohrungen kann der Durchmesser der Messsonde 10 im Bereich der auszumessenden Bohrung auch kleiner sein als in den übrigen Bereichen.

Neben der Rundheit und dem Formverlauf einer auszumessenden Bohrung kann mit einer erfindungsgemäßen Vorrichtung auch die Zylinderform der Bohrung bestimmt werden. Dies ist möglich, da die Neigung der Messsonde gemessen wird und eine Schrägheit oder ein Versatz der Zylinderachse der Bohrung dadurch festgestellt werden kann.

Insgesamt ermöglicht die Erfindung eine robuste und schnelle Messung der Rundheit, der Geradheit des Formverlaufs, der Zylinderform und des Durchmessers verschiedener Bohrungen. Es können z.B. Zylinderbohrungen beim Formhonen vermessen werden oder es kann eine zuverlässige Kontrolle der Verformung von in Bohrungen eingepressten Hülsen oder dergleichen vorgenommen werden. Die erfindungsgemäße Vermessungsvorrichtung ist auf einfache Weise in eine Fertigungsmaschine integrierbar und ermöglicht eine schnelle, 100%-ige Kontrolle der gefertigten Bauteile. Von besonderem Vorteil ist auch die durch die Erfindung gegebene Möglichkeit, Bohrungsprüfungen vor Ort durchzuführen, ohne das zugehörige Werkstück in ein Labor bringen zu müssen.

Bezugszeichenliste:

| 1 | erster halterseitiger Abstandssensor |
|---|---|
| 2 | zweiter halterseitiger Abstandssensor |
| 3 | dritter halterseitiger Abstandssensor |
| 4 | vierter halterseitiger Abstandssensor |
| 5 | messsondenseitiger Abstandssensor |
| 6 | Drehwinkelsensor |
| 7 | messsondenseitiger Abstandssensor |
| 8 | messsondenseitiger Abstandssensor |
| 9 | Linearschlitten |
| 10 | Messsonde |
| 11, 11' | Werkstück |
| 12, 12' | Halter |
| 13 | Kanal |
| 15 | Kraft |
| 16 | Motor |
| 17 | Innenwand |
| 18 | O-Ring |
| 19 | O-Ring |
| 20 | Kanal |
| 21 | Kanal |
| 22 | Teller |
| 50 | Bohrung |
| 51 | vorderes Ende |
| 52 | Anlagefläche |
| 53 | Ausnehmung |
| 55 | oberer Rand |
| H | Hüllkreis |
| P | Pferchkreis |
| R | Rotationsachse |
| L | Abstand |
| Dmin | minimaler Durchmesser |
| Dmax | maximaler Durchmesser |
| $\alpha$ | momentaner Drehwinkel |
| $\delta$ | Differenz der Radien |
| $\beta$ | Winkelabweichung |

**Patentansprüche**

1.  Vorrichtung zur industriellen Vermessung von Bohrungen (50) in einem Messobjekt (11, 11'), insbesondere Werkstück, mit einer in die Bohrung (50) einführbaren Messsonde (10), an der wenigstens ein Abstandssensor (5) vorgesehen ist, mit dem der momentane Abstand (L) eines Bezugspunkts der Messsonde (10) von einer Wand (17) der Bohrung (50) bestimmbar ist, wobei
die Messsonde (10) drehbar an einem Halter (12, 12'), der gegenüber dem Messobjekt (M,M') fixiert ist und/oder dessen Position relativ zu dem Messobjekt (11, 11') bekannt ist, gelagert ist, und wobei eine Auswerteeinrichtung der Vorrichtung dazu ausgebildet ist, im Verlauf einer Drehung der Messsonde (10) eine Anzahl an aufeinanderfolgend bestimmten Abständen (L) zu empfangen, **dadurch gekennzeichnet, dass** die Vorrichtung Mittel zum Bestimmen der Neigung der Messsonde (10) relativ zu dem Halter (12, 12') sowie Korrekturmittel zum Kompensieren von Eigenbewegungen und Fehlstellungen der Messsonde (10) anhand der Neigung aufweist.

2. Vorrichtung nach Anspruch 1,
   **dadurch gekennzeichnet, dass**
   die Auswerteeinrichtung dazu ausgebildet ist, aus den aufeinanderfolgend bestimmten Abständen (L) einen Pferchkreis (P) und einen Hüllkreis (H) der vermessenen Bohrung (50) zu bestimmen, und/oder dass
   die Auswerteeinrichtung dazu ausgebildet ist, aus den aufeinanderfolgend bestimmten Abständen (L) zumindest abschnittsweise den Formverlauf der Bohrung (50) zu ermitteln.

3. Vorrichtung nach zumindest einem der vorstehenden Ansprüche,
   **dadurch gekennzeichnet, dass**
   ein Antrieb (16) zum Drehen der Messsonde (10) gegenüber dem Halter (12, 12') vorgesehen ist.

4. Vorrichtung nach zumindest einem der vorstehenden Ansprüche,
   **dadurch gekennzeichnet, dass**
   ein Drehstellungssensor (6) zur Bestimmung der momentanen Drehstellung ($\alpha$) der Messsonde (10) relativ zu dem Halter (12, 12') vorgesehen ist, wobei die Auswerteeinrichtung dazu ausgebildet ist, im Verlauf einer Drehung der Messsonde (10) jeweilige durch den Abstandssensor (5) bestimmte Abstände (L) mit den zugehörigen durch den Drehstellungssensor (6) bestimmten Drehstellungen ($\alpha$) in Beziehung zu setzen.

5. Vorrichtung nach zumindest einem der vorstehenden Ansprüche,
   **dadurch gekennzeichnet, dass**
   Mittel zum Bestimmen der Position der Messsonde (10) relativ zu dem Halter (12, 12') und/oder zum Messobjekt (11, 11') sowie Korrekturmittel zum Kompensieren von Eigenbewegungen und Fehlstellungen der Messsonde (10) anhand der Position vorgesehen sind.

6. Vorrichtung nach zumindest einem der vorstehenden Ansprüche,
   **dadurch gekennzeichnet, dass**
   als Mittel zum Bestimmen der Neigung der Messsonde (10) wenigstens ein Abstandssensor (1, 2, 3, 4) an dem Halter (12, 12') vorgesehen ist, mit welchem der momentane Abstand eines Bezugspunkts des Halters (12, 12') von der Messsonde (10) bestimmbar ist.

7. Vorrichtung nach Anspruch 6,
   **dadurch gekennzeichnet, dass**
   an dem Halter (12, 12') wenigstens ein Paar aus zwei in einer gemeinsamen Ebene angeordneten und um einen Drehwinkel, vorzugsweise um 90°, bezüglich einer Rotationsachse (R) der Messsonde (10) zueinander versetzten Abstandssensoren (1, 2, 3, 4) zur Bestimmung des momentanen Abstands eines Bezugspunkts des Halters (12, 12') von der Messsonde (10) vorgesehen ist, wobei insbesondere wenigstens zwei in Richtung einer Rotationsachse (R) voneinander beabstandete Paare von Abstandssensoren (1, 2, 3, 4) zur Bestimmung des momentanen Abstands eines Bezugspunkts des Halters (12, 12') von der Messsonde (10) vorgesehen sind.

8. Vorrichtung nach zumindest einem der vorstehenden Ansprüche,
   **dadurch gekennzeichnet, dass**
   die Messsonde (10) dornartig und insbesondere abschnittsweise zylindrisch ausgebildet ist, wobei eine Längsmittelachse der Messsonde (10) mit einer Rotationsachse (R) zusammenfällt.

9. Vorrichtung nach zumindest einem der vorstehenden Ansprüche,
   **dadurch gekennzeichnet, dass**
   mehrere Abstandssensoren (1, 2, 3, 4) zur Bestimmung des momentanen Abstands eines Bezugspunkts des Halters (12, 12') von der Messsonde (10) an der Messsonde (10) vorgesehen sind, welche in Richtung einer Rotationsachse (R) der Messsonde (10) zueinander beabstandet sind und bevorzugt in Bezug auf die Rotationsachse (R) zueinander drehversetzt sind.

10. Vorrichtung nach zumindest einem der vorstehenden Ansprüche,

**dadurch gekennzeichnet, dass**
wenigstens einer der Abstandssensoren (1, 2, 3, 4, 5) auf einem induktiven oder kapazitiven Messprinzip beruht.

11. Vorrichtung nach zumindest einem der vorstehenden Ansprüche,
**dadurch gekennzeichnet, dass**
wenigstens einer der Abstandssensoren (1, 2, 3, 4, 5) als pneumatische Messdüse ausgebildet ist.

12. Vorrichtung nach zumindest einem der vorstehenden Ansprüche,
dadurchgekennzeichnet, dass
an dem Halter (12) eine Anlagefläche (52) zum Andrücken der Vorrichtung an eine Oberfläche des Messobjekts (11) vorgesehen ist, oder dass
an dem Halter (12') wenigstens eine Aufnahme (53) für einen Eingriff mit einem Wandabschnitt (55) des Messobjekts (11') vorgesehen ist, wobei in der Aufnahme insbesondere elastische Elemente zum Fixieren des Wandabschnitts in der Aufnahme vorgesehen sind, und/oder dass
die Messsonde (10) in Richtung einer Rotationsachse (R) relativ zum Halter (12, 12') verstellbar ist, insbesondere mittels eines angetriebenen Linearschlittens (9).

13. Verfahren zur industriellen Vermessung von Bohrungen (50) in einem Messobjekt (11, 11'), insbesondere Werkstück, mittels einer in die Bohrung (50) einführbaren Messsonde (10), an der wenigstens ein Abstandssensor (5) vorgesehen ist, mit dem der momentane Abstand (L) eines Bezugspunkts der Messsonde (10) von einer Wand (17) der Bohrung (50) bestimmbar ist, mit den Schritten:

- Einführen der Messsonde (10) in die Bohrung (50); und
- Drehen der Messsonde (10) in der Bohrung (50), wobei während des Drehens wiederholt oder kontinuierlich die momentanen Abstände (L) bestimmt werden,

**gekennzeichnet durch** die Schritte:

- Bestimmen der Neigung der Messsonde (10) relativ zu dem Halter (12, 12') und
- Kompensieren von Eigenbewegungen und Fehlstellungen der Messsonde (10) anhand der Neigung.

14. Verfahren nach Anspruch 13,
**dadurch gekennzeichnet, dass**
aus den bestimmten Abständen (L) der Pferchkreis (P) der Bohrung (50) und der Hüllkreis (H) der Bohrung (50) bestimmt werden, wobei insbesondere aus der Abweichung zwischen dem Pferchkreis (P) und dem Hüllkreis (H) die Rundheit der Bohrung (50) bestimmt wird.

15. Verfahren nach Anspruch 13 oder 14,
**dadurch gekennzeichnet, dass**
aus den während des Drehens bestimmten Abständen (L) zumindest abschnittsweise der Formverlauf der Bohrung (50) ermittelt wird, und/oder dass
die Messsonde (10) während eines Messvorgangs um wenigstens eine volle Umdrehung gedreht wird, und/oder dass eine während des Drehens auftretende Positionsänderung und/oder Neigungsänderung der Messsonde (10) relativ zum Messobjekt (11, 11') erfasst und bei der Auswertung berücksichtigt wird.

**Claims**

1. An apparatus for the industrial measurement of bores (50) in a measurement object (11, 11'), in particular a workpiece, having a measurement probe (10) which can be introduced into the bore (50) and at which at least one distance sensor (5) is provided with which the instantaneous distance (L) of a reference point of the measurement probe (10) from a wall (17) of the bore (50) can be determined, wherein
the measurement probe (10) is rotatably supported at a holder (12, 12') which is fixed with respect to the measurement object (M, M') and/or whose position relative to the measurement object (11, 11') is known, and wherein an evaluation device of the apparatus is designed to receive a number of sequentially determined distances (L) in the course of a rotation of the measurement probe (10),
**characterized in that**
the apparatus has means for determining the inclination of the measurement probe (10) relative to the holder (12, 12') and correction means for compensating own movements and error positions of the measurement probe (10) with reference to the inclination.

2. An apparatus in accordance with claim 1,
   **characterized in that**
   the evaluation device is designed to determine a maximum inscribed circle (P) and a minimum circumscribed circle (H) of the measured bore (50) from the sequentially determined distances (L); and/or **in that**
   the evaluation device is designed to determine the shape extent of the bore (50) at least sectionally from the sequentially determined distances (L).

3. An apparatus in accordance with at least one of the preceding claims,
   **characterized in that**
   a drive (16) is provided to rotate the measurement probe (10) with respect to the holder (12, 12').

4. An apparatus in accordance with at least one of the preceding claims,
   **characterized in that**
   a rotational position sensor (6) is provided for determining the instantaneous rotational position ($\alpha$) of the measurement probe (10) relative to the holder (12, 12'), with the evaluation device being designed to put respective distances (L) determined in the course of a rotation of the measurement probe (10) by the distance sensor (5) into relation with the associated rotational positions ($\alpha$) determined by the rotational position sensor (6).

5. An apparatus in accordance with at least one of the preceding claims,
   **characterized in that**
   means are provided for determining the position of the measurement probe (10) relative to the holder (12, 12') and/or to the measurement object (11, 11') and correction means are provided for compensating own movements and error positions of the measurement probe (10) with reference to the position.

6. An apparatus in accordance with at least one of the preceding claims,
   **characterized in that**
   at least one distance sensor (1, 2, 3, 4) is provided at the holder (12, 12') as means for determining the inclination of the measurement probe (10) and the instantaneous distance of a reference point of the holder (12, 12') from the measurement probe (10) can be determined using it.

7. An apparatus in accordance with claim 6,
   **characterized in that**
   at least one pair of distance sensors (1, 2, 3, 4) is provided at the holder (12, 12') for determining the instantaneous distance of a reference point of the holder (12, 12') from the measurement probe (10), said at least one pair being arranged in a common plane and being offset to one another by an angle of rotation, preferably by 90°, with respect to an axis of rotation (R) of the measurement probe (10), with at least two pairs of distance sensors (1, 2, 3, 4) spaced apart from one another in the direction of an axis of rotation (R) in particular being provided for determining the instantaneous distance of a reference point of the holder (12, 12') from the measurement probe (10).

8. An apparatus in accordance with at least one of the preceding claims,
   **characterized in that**
   the measurement probe (10) is configured as mandrel-like and in particular as sectionally cylindrical, with a longitudinal center axis of the measurement probe (10) coinciding with an axis of rotation (R).

9. An apparatus in accordance with at least one of the preceding claims,
   **characterized in that**
   a plurality of distance sensors (1, 2, 3, 4) are provided at the measurement probe (10) for determining the instantaneous distance of a reference point of the holder (12, 12') from the measurement probe (10) which are spaced apart from one another in the direction of an axis of rotation (R) of the measurement probe (10) and are preferably rotationally offset to one another with respect to the axis of rotation (R).

10. An apparatus in accordance with at least one of the preceding claims,
    **characterized in that**
    at least one of the distance sensors (1, 2, 3, 4, 5) is based on an inductive or capacitive measurement principle.

**11.** An apparatus in accordance with at least one of the preceding claims,
**characterized in that**
at least one of the distance sensors (1, 2, 3, 4, 5) is made as a pneumatic measurement nozzle.

**12.** An apparatus in accordance with at least one of the preceding claims,
**characterized in that**
a contact surface (52) is provided at the holder (12) for pressing the apparatus toward a surface of the measurement object (11); or **in that**
at least one receiver (53) is provided at the holder (12') for an engagement with a wall section (55) of the measurement object (11'), with elastic elements in particular being provided in the receiver for fixing the wall section in the receiver; and/or **in that**
the measurement probe (10) is adjustable in the direction of an axis of rotation (R) relative to the holder (12, 12'), in particular by means of a driven linear slide (9).

**13.** A method for the industrial measurement of bores (50) in a measurement object (11, 11'), in particular a workpiece, by means of a measurement probe (10) which can be introduced into the bore (50) and at which at least one distance sensor (5) is provided with which the instantaneous distance (L) of a reference point of the measurement probe (10) from a wall (17) of the bore (50) can be determined, comprising the steps:

- introducing the measurement probe (10) into the bore (50); and
- rotating the measurement probe (10) in the bore (50), with the instantaneous distances (L) being determined repeatedly or continuously during the rotation,

**characterized by** the steps:

- determining the inclination of the measurement probe (10) relative to the holder (12, 12'); and
- compensating own movements and error positions of the measurement probe (10) with reference to the inclination.

**14.** A method in accordance with claim 13,
**characterized in that**
the maximum inscribed circle (P) of the bore (50) and the minimum circumscribed circle (H) of the bore (50) are determined from the determined distances (L), with the roundness of the bore (50) in particular being determined from the deviation between the maximum inscribed circle (P) and the minimum circumscribed circle (H).

**15.** A method in accordance with claim 13 or 14,
**characterized in that**
the shape extent of the bore (50) is determined at least sectionally from the distances (L) determined during the rotation; and/or **in that**
the measurement probe (10) is rotated by at least one full revolution during a measurement procedure; and/or **in that** a position change and/or an inclination change of the measurement probe (10) occurring during the rotation is detected relative to the measurement object (11, 11') and is taken into account in the evaluation.

**Revendications**

**1.** Dispositif de mesurage industriel de perçages (50) dans un objet à mesurer (11, 11'), en particulier dans une pièce à oeuvrer, comportant une sonde de mesure (10) susceptible d'être introduite dans le perçage (50), sur laquelle est prévu au moins un capteur de distance (5) permettant de déterminer la distance momentanée (L) d'un point de référence de la sonde de mesure (10) par rapport à une paroi (17) du perçage (50), dans lequel la sonde de mesure (10) est montée de façon rotative sur un élément de retenue (12, 12') qui est fixé par rapport à l'objet à mesurer (M, M') et/ou dont la position par rapport à l'objet à mesurer (11, 11') est connue, et dans lequel un moyen d'évaluation du dispositif est réalisé pour recevoir un certain nombre de distances (L) déterminées successivement pendant le déroulement d'une rotation de la sonde de mesure (10),
**caractérisé en ce que**
le dispositif comprend des moyens pour déterminer l'inclinaison de la sonde de mesure (10) par rapport à l'élément de retenue (12, 12') ainsi que des moyens de correction pour compenser des mouvements propres et des positions erronées de la sonde de mesure (10) à l'aide de l'inclinaison.

2. Dispositif selon la revendication 1,
**caractérisé en ce que**
le moyen d'évaluation est réalisé pour déterminer, à partir des distances (L) déterminées successivement, un cercle inscrit (P) et un cercle enveloppant (H) du perçage mesuré (50),
et/ou **en ce que**
le moyen d'évaluation est réalisé pour détecter, à partir des distances (L) déterminées successivement, au moins localement l'allure de la forme du perçage (50).

3. Dispositif selon l'une des revendications précédentes,
**caractérisé en ce que**
il est prévu un entraînement (16) pour tourner la sonde de mesure (10) par rapport à l'élément de retenue (12, 12').

4. Dispositif selon l'une des revendications précédentes,
**caractérisé en ce que**
il est prévu un capteur de position de rotation (6) pour déterminer la position de rotation momentanée (α) de la sonde de mesure (10) par rapport à l'élément de retenue (12, 12'), le moyen d'évaluation étant réalisé pour mettre en relation des distances respectives (L) déterminées par le capteur de distance (5) avec les positions de rotation (α) associées déterminées par le capteur de position de rotation (6), pendant le déroulement d'une rotation de la sonde de mesure (10).

5. Dispositif selon l'une des revendications précédentes,
**caractérisé en ce que**
il est prévu des moyens pour déterminer la position de la sonde de mesure (10) par rapport à l'élément de retenue (12, 12') et/ou par rapport à l'objet à mesurer (11, 11') ainsi que des moyens de correction pour compenser des mouvements propres et des positions erronées de la sonde de mesure (10) à l'aide de la position.

6. Dispositif selon l'une des revendications précédentes,
**caractérisé en ce que**
il est prévu, en tant que moyen pour déterminer l'inclinaison de la sonde de mesure (10), au moins un capteur de distance (1, 2, 3, 4) sur l'élément de retenue (12, 12'), permettant de déterminer la distance momentanée d'un point de référence de l'élément de retenue (12, 12') par rapport à la sonde de mesure (10).

7. Dispositif selon la revendication 6,
**caractérisé en ce que**
sur l'élément de retenue (12, 12') est prévue au moins une paire de deux capteurs de distance (1, 2, 3, 4) agencés dans un plan commun et décalés l'un de l'autre d'un angle de rotation, de préférence de 90°, par rapport à un axe de rotation (R) de la sonde de mesure (10), afin de déterminer la distance momentanée d'un point de référence de l'élément de retenue (12, 12') par rapport à la sonde de mesure (10), et il est prévu en particulier au moins deux paires de capteurs de distance (1, 2, 3, 4) espacés l'un de l'autre en direction d'un axe de rotation (R) afin de déterminer la distance momentanée d'un point de référence de l'élément de retenue (12, 12') par rapport à la sonde de mesure (10).

8. Dispositif selon l'une des revendications précédentes,
**caractérisé en ce que**
la sonde de mesure (10) est réalisée en forme de mandrin et en particulier en forme localement cylindrique, un axe central longitudinal de la sonde de mesure (10) coïncidant avec un axe de rotation (R).

9. Dispositif selon l'une des revendications précédentes,
**caractérisé en ce que**
sur la sonde de mesure (10) sont prévus plusieurs capteurs de distance (1, 2, 3, 4) pour déterminer la distance momentanée d'un point de référence de l'élément de retenue (12, 12') par rapport à la sonde de mesure (10), qui sont espacés les uns des autres en direction d'un axe de rotation (R) de la sonde de mesure (10) et qui sont de préférence décalés en rotation les uns des autres par rapport à l'axe de rotation (R).

10. Dispositif selon l'une des revendications précédentes,
**caractérisé en ce que**

l'un au moins des capteurs de distance (1, 2, 3, 4, 5) repose sur un principe de mesure inductif ou capacitif.

**11.** Dispositif selon l'une des revendications précédentes,
**caractérisé en ce que**
l'un au moins des capteurs de distance (1, 2, 3, 4, 5) est réalisé sous forme de buse de mesure pneumatique.

**12.** Dispositif selon l'une des revendications précédentes,
**caractérisé en ce que**
sur l'élément de retenue (12) est prévue une surface d'appui (52) pour presser le dispositif contre une surface de l'objet à mesurer (11),
ou **en ce que**
sur l'élément de retenue (12') est prévu au moins un logement (53) pour un engagement avec une portion de paroi (55) de l'objet à mesurer (11'), dans lequel des éléments en particulier élastiques sont prévus dans le logement pour fixer la portion de paroi dans le logement,
et/ou **en ce que**
la sonde de mesure (10) est déplaçable en direction d'un axe de rotation (R) par rapport à l'élément de retenue (12, 12'), en particulier au moyen d'un chariot linéaire entraîné (9).

**13.** Procédé de mesurage industriel de perçages (50) dans un objet à mesurer (11, 11'), en particulier dans une pièce à oeuvrer, au moyen d'une sonde de mesure (10) susceptible d'être introduite dans le perçage (50), sur laquelle est prévu au moins un capteur de distance (5) permettant de déterminer la distance momentanée (L) d'un point de référence de la sonde de mesure (10) par rapport à une paroi (17) du perçage (50), comprenant les étapes consistant à :

- introduire la sonde de mesure (10) dans le perçage (50) ; et
- tourner la sonde de mesure (10) dans le perçage (50), en déterminant de façon répétitive ou en continu les distances momentanées (L) pendant la rotation,

**caractérisé par** les étapes consistant à :

- déterminer l'inclinaison de la sonde de mesure (10) par rapport à l'élément de retenue (12, 12') et
- compenser des mouvements propres et des positions erronées de la sonde de mesure (10) à l'aide de l'inclinaison.

**14.** Procédé selon la revendication 13,
**caractérisé en ce que**
à partir des distances déterminées (L) on détermine le cercle inscrit (P) du perçage (50) et le cercle enveloppant (H) du perçage (50), et en particulier en se basant sur la différence entre le cercle inscrit (P) et le cercle enveloppant (H), on détermine la rondeur du perçage (50).

**15.** Procédé selon la revendication 13 ou 14,
**caractérisé en ce que**
on détermine au moins localement l'allure de la forme du perçage (50) en se basant sur les distances (L) déterminées pendant la rotation,
et/ou **en ce que**
on tourne la sonde de mesure (10) d'au moins un tour complet pendant une opération de mesure,
et/ou **en ce que**
on détecte une modification de la position et/ou une modification de l'inclinaison de la sonde de mesure (10) par rapport à l'objet à mesurer (11, 11') qui se produit pendant la rotation, et on la prend en compte lors de l'évaluation.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020069547 A1
- DE 4004237 A1
- US 4963018 A
- WO 9915853 A